# EUROPEAN PATENT APPLICATION

(11) **EP 1 588 610 A1**
(43) Date of publication of application: **26.10.2005**
(21) Application number: 04076241.1
(22) Date of filing: 23.04.2004
(51) Int. Cl.: A01K 61/00

(54) **System for harvesting seed mussels**

(71) Applicant: Lenger, Simon August, 4401 LA Yerseke (NL); Loonstra, Tjalling, 1778 KN Westerland (NL)
(72) Inventor: Lenger, Simon August, 4401 LA Yerseke (NL); Loonstra, Tjalling, 1778 KN Westerland (NL)
(74) Representative: van Westenbrugge, Andries

(57) **Abstract**

A system for growing and harvesting seed mussels comprises a bendable elongate growing member (7), such as a rope or wire, holding means (1, 1') for holding the member (7) in a water body (4) in such a way that mussel larvae can become deposited on and adhered to said member (7) so as to mature into seed mussels, and harvesting means (13; 23-25) for removing and collecting the seed mussels from the member (7). The holding means comprise a spool (1, 1') accommodating the member (7) in such a way that it extends according to several windings (8) around said spool (1, 1') and that the member (7) can be unwound from the spool (1, 1') for feeding to the harvesting means (13; 23-25).

## Description

The invention is related to a system for growing and harvesting seed mussels, comprising a bendable elongate growing member, such as a rope or wire, holding means for holding the member in a water body in such a way that mussel larvae can become deposited on and adhered to said member so as to mature into seed mussels, and harvesting means for removing and collecting the seed mussels from the member.

Such systems are known. The ropes are usually suspended from a buoy in such a way that they assume a vertical position in the body of water. After the seed mussels have matured to a certain extent, the ropes are retrieved from the body of water and the seed mussels are removed therefrom. Subsequently, the seed mussels are spread over a parcel of the bottom of a suitable water body for further growth.

The prior art systems have several disadvantages. Such systems are not particularly fit for application in relatively shallow waters. In those cases, the ropes to be used would be very short, which would greatly aggravate the harvesting of the seed mussels having regard to the large numbers of short ropes which would have to be dealt with. A further disadvantage is that the handling of the ropes after retrieval thereof is rather cumbersome. The ropes can become entangled both under water and above water.

The object of the invention is to provide a system as described before for harvesting seed mussels by means of a member such as a rope, which does not have these disadvantages. Said aim is achieved in that the holding means comprise a spool accommodating the member in such a way that it extends according to several windings around said spool and that the member can be unwound from the spool for feeding to the harvesting means.

Around the spool, a fair amount of rope can be wound, which means that in a restricted area, and even in relatively shallow water, a single length of rope van be effectively applied for growing seed mussels. The handling of the rope both above and under water is greatly simplified, as it remains on the spool.

The rope can be applied to the spool in several ways; preferably, the member extends in a screw like fashion around the spool. With the aim of providing as much space as possible for the growth of the seed mussels, neighbouring windings of the member on the spool may enclose an open space. Thereby, the seed mussels can grow all around the full circumference of the rope, which makes it possible to obtain a maximum amount of seed mussels.

The spool can be carried out in several ways. Preferably, the spool comprises a cage consisting of circumferentially extending hoops connected through axially extending bars. Such cage has an open structure. Together with the rope windings which enclose open spaces, it is thus ensured that the water can flow more or less freely into and out of the cage. Thereby, negative effects of strong currents on the mooring of the cage can be mitigated.

The spool may comprise an axial hollow central shaft. Furthermore, vertically oriented mooring means, such as a post, can be provided which can be founded on the bottom of a body of water, the shaft in a vertical position being slideable over the mooring means.

The system according to the invention may furthermore comprise a vessel provided with a support for the spool, hoisting means for transferring the spool between a position in a body of water and a position on the support. Preferably, the vessel comprises a further support for a further spool, the member being transferable between both spools by winding respectively unwinding. The rope which, with the aim of collecting the seed mussels, is unwound can thereafter directly be wound onto the second spool. Thus, the handling of the fairly long rope is simplified, and at the same time the further spool is made ready for positioning in the body of water so as to harvest further seed mussels with the same rope.

For ease of handling, the support can comprise a tilting table for transferring the spool between an upright position and a lying position, vice versa.

The invention is also related to a method for harvesting seed mussels with the system described before, comprising the steps of:
- providing at least one spool,
- winding the bendable elongate growing member around said spool,
- mooring the spool with member wound thereon to the bed of a body of water so as to collect larvae which mature into seed mussels,
- retrieving the spool with member wound thereon and seed mussels adhered to said member from the body of water,
- unwinding the member from the spool and removing the seed mussels from said member.

The invention is furthermore related to a vessel to be used in the system described before, comprising at least one support for a spool.

The invention will now be described further with reference to an embodiment of the system shown in the figures.
Figure 1 shows a side view of a spool with rope positioned on the bed of a body of water.
Figure 2 shows a side view of a vessel together with a spool in upright position.
Figure 3 shows the spool in lying position.
Figure 4 shows a top view of a vessel with two spools.
Figure 5 shows a front view of the vessel.
Figure 6 shows a parcel of the bottom of a body of water with a plurality of spools according to the invention.

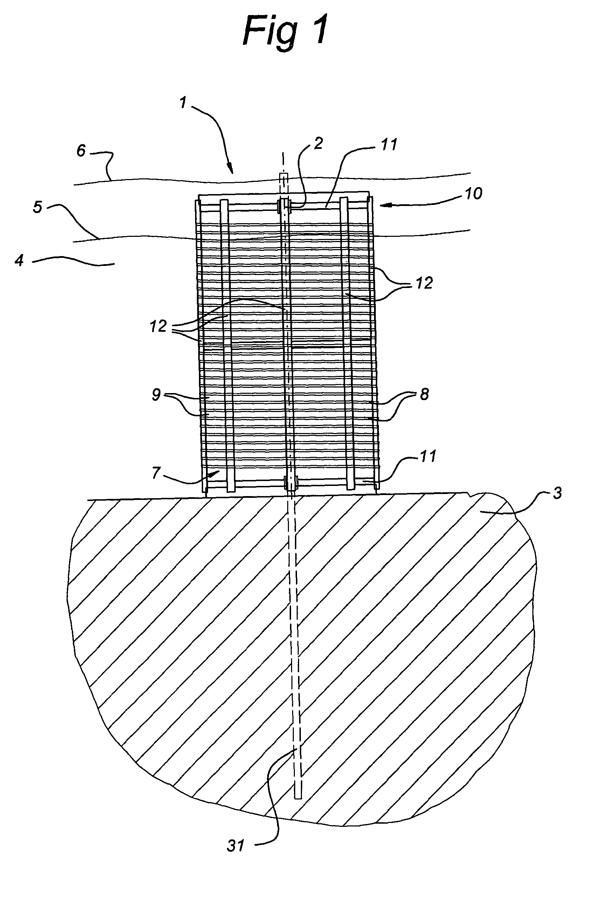

In figure 1 a spool 1 is shown which is moored to an upright post 2, which in turn is founded in the bottom of the body of water 3. The low tide and high tide of said body of water are schematically indicated at 5 and 6.

Around the spool 1, a flexible elongate member such as a rope 7 is wound in a plurality of windings 8. Between those windings 8, open spaces 9 are left. Mussel larvae can become deposited on said rope, over the full circumference of the windings 8 thereof. Gradually, the larvae grow into seed mussels; due to the fairly large length of the rope 7, accordingly a large number of seed mussels will be obtained in this way.

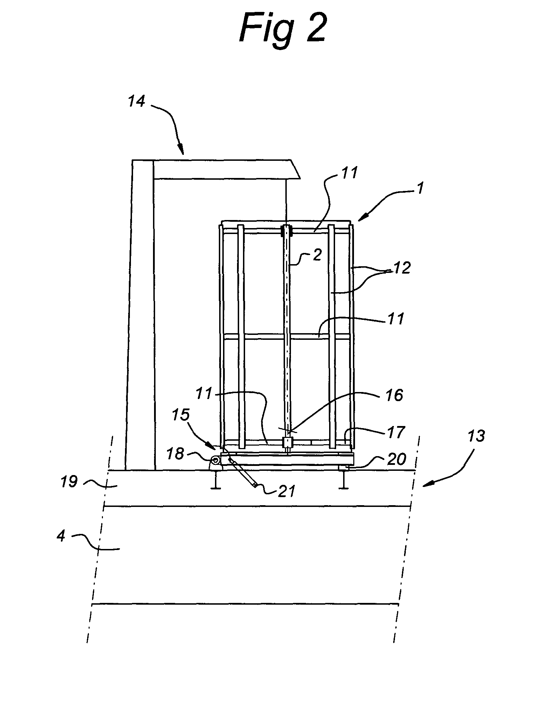

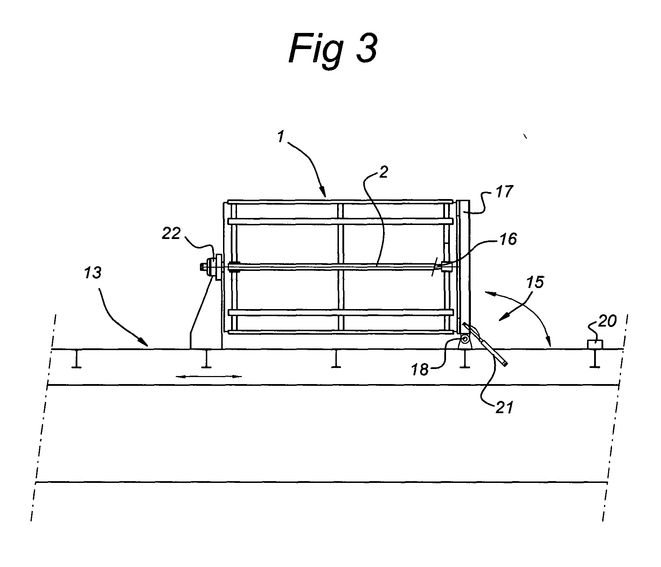

The spool 1 comprises a cage 10 consisting of circumferentially extending hoops 11 which interconnected to axially extended bars 12. As shown in figures 2 and 3, the spools 1 can be hoisted on board a vessel 13 which is in the body of water 4. For clarity, the rope has not been shown in figures 2 and 3. The hoisting crane 14 is able to transfer the spool 1 between the vessel 13 and the body of water 4. The spool 1 is positioned on top of a so called tilting table 15 which has a stub axle 16 which protrudes in the axial hollow central shaft 2 of the spool 1.

The tilting table comprises a template 17 which by means of a hinge 18 is connected to the deck 19 of the vessel 13. At its other end, the template 17 rests on a support 20. By means of the hydraulic piston/cylinder device 21, the template 17 can be brought from the horizontal position shown in figure 2, into the vertical position shown in figure 3.

At its end opposite the stub axle 16, the spool 1 is supported by means of a hydraulic motor 22.

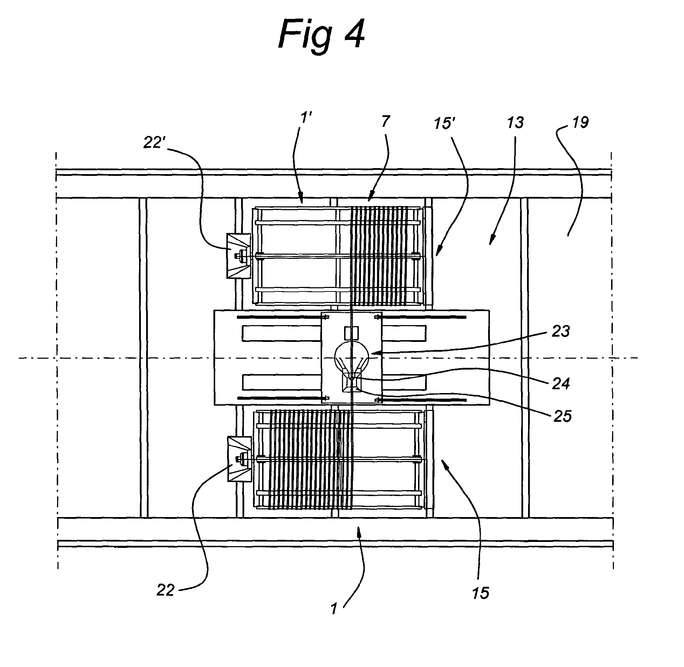

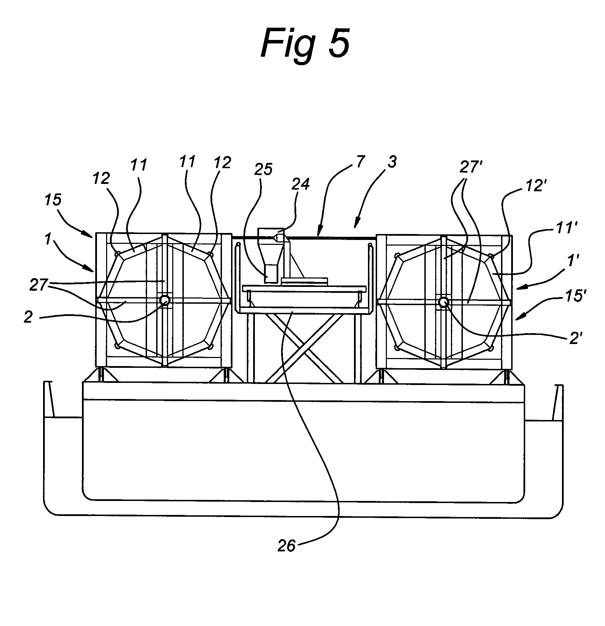

As shown in figure 4 and 5 two spools 1, 1' are accommodated on the deck 19 of the vessel 13. Thus, also two tilting tables 15, 15' are available as well as two hydraulic motors 22, 22'. In the embodiment shown, hydraulic motor 22' is a drive motor for winding the rope 7 onto the spool 1', whereas hydraulic motor 22 acts as a braking motor for holding the rope 7 tight between the two spools 1, 1'.

Between the two spools 1, 1', the removing means 23 are positioned. These removing means comprise a scraping device 24 which is known per se, and through the nip of which the cable 7 is fed. While the rope 7 is being transferred from spool 1 to spool 1', the seed mussels are scraped off from the rope 7 and are convected in the reservoir 25.

As shown in figure 5, the removing device 23 accommodated on a table so as to bring the scraping device 24 in line with the rope 7. In figure 4, it can furthermore be seen that the hoops 11 are connected to the axial hollow central shaft 2 by means of spokes 27, 27'.

After the rope 7 has been fully wound onto the spool 1', said spool 1' with the rope, now without seed mussels, can be positioned in the body of water 4 as according to figure 1, after which the deposition of larvae can further place.

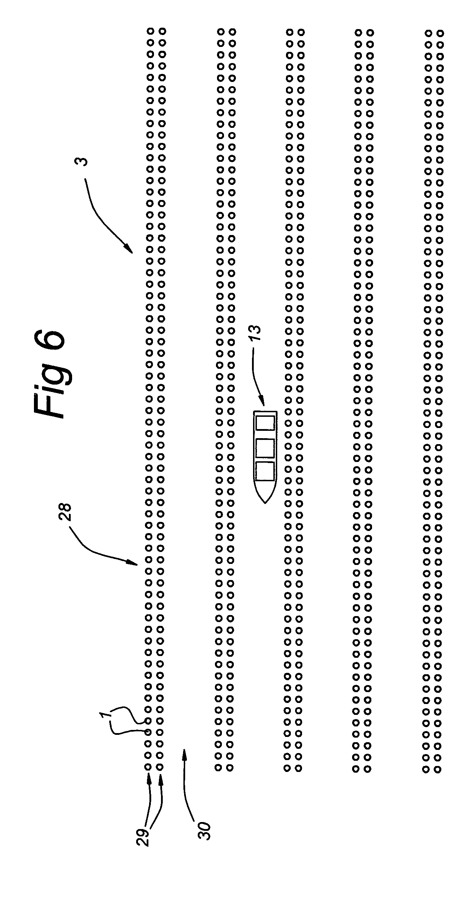

Figure 6 shows a parcel 28 on the bottom 3 of the body of water, provided with several rows 29 with spools 1. Between the rows 29, a path 30 is kept clear for the vessel 13 so as to transfer the spools 1 between the bottom 3 and the vessel 13 with the aim of harvesting seed mussels.

## Claims

1. System for growing and harvesting seed mussels, comprising a bendable elongate growing member (7), such as a rope or wire, holding means (1, 1') for holding the member (7) in a water body (4) in such a way that mussel larvae can become deposited on and adhered to said member (7) so as to mature into seed mussels, and harvesting means (13; 23-25) for removing and collecting the seed mussels from the member (7), **characterized in that** the holding means comprise a spool (1, 1') accommodating the member (7) in such a way that it extends according to several windings (8) around said spool (1, 1') and that the member (7) can be unwound from the spool (1, 1') for feeding to the harvesting means (13; 23-25).

2. System according to claim 1, wherein the member (7) extends in a screw like fashion around the spool (1, 1').

3. System according to claim 2, wherein neighbouring windings (8) of the member on the spool enclose an open space (9).

4. System according to any of the preceding claims, wherein the spool (1, 1') comprises a cage (10) consisting of circumferentially extending hoops (11) connected through axially extending bars (12).

5. System according to any of the preceding claims, wherein the spool (1, 1') comprises an axial hollow central shaft (2, 2'), vertically oriented mooring means (31) being provided which can be founded on the bottom (3) of a body (4) of water, the shaft (2, 2') in a vertical position being slideable over the mooring means (31).

6. System according to claim 5, wherein the mooring means comprise a slender body (31), such as a pipe or axle.

7. System according to any of the preceding claims, wherein the harvesting means comprises a vessel (13) provided with a support (15, 22) for the spool (1), hoisting means (14) for transferring the spool (1) between a position in a body (4) of water and a position on the support (15, 22).

8. System according to claim 7, wherein the vessel (13) comprises a further support (15', 22') for a further spool (1'), the member (7) being transferable between both spools (1, 1') by winding respectively unwinding.

9. System according to claim 7 or 8, wherein the support (15, 15') comprises a tilting table (17, 17') for transferring the spool (1, 1') between an upright position and a lying position.

10. System according to claim 8 or 9, wherein the vessel (13) comprises a removing means (23) for removing the seed mussels from the member (7) while said member is being transferred between the spools (1,1').

11. Method for harvesting seed mussels with the system according to any of the preceding claims, comprising the steps of:
- providing at least one spool (1, 1'),
- winding the bendable elongate growing member (7) around said spool (1, 1'),
- mooring the spool (1, 1') with member (7) wound thereon to the bed (3) of a body (4) of water, so as to collect larvae which mature into seed mussels,
- retrieving the spool (1, 1') with member (7) wound thereon and seed mussels adhered to said member from the body (4) of water,
- unwinding the member (7) from the spool (1, 1') and removing the seed mussels from said member (7).

12. Method according to claim 11, wherein the member (7) after unwinding from the spool (1) and removing the seed mussels is wound onto a second spool (1').

13. Method according to claim 11 or 12, comprising the step of bringing the spool (1, 1') in a lying position after retrieval thereof and before unwinding the member (7).

14. Vessel to be used in the system according to any of claims 7-10, comprising at least one support (15, 22; 15', 22') for a spool (1, 1').

15. Vessel according to claim 14, comprising two supports (15, 22; 15', 22') which each can support a respective spool (1, 1').

16. Vessel according to claim 14 or 15, wherein the support comprises a tilting table (15, 15') for transferring the spool (1, 1') between an upright position and a lying position.

17. Vessel according to claim 14, 15 or 16, comprising removing means (23) for removing the seed mussels from the member (7) after unwinding thereof.

## Amended claims

### Amended claims in accordance with Rule 86(2) EPC.

**1.** System for growing and harvesting seed mussels, comprising a bendable elongate growing member (7), such as a rope or wire, holding means (1, 1') for holding the member (7) in a water body (4) in such a way that mussel larvae can become deposited on and adhered to said member (7) so as to mature into seed mussels, and harvesting means (13; 23-25) for removing and collecting the seed mussels from the member (7), said holding means comprising a spool (1, 1') accommodating the member (7) in such a way that it extends according to several windings (8) around said spool (1, 1') and the member (7) can be unwound from the spool (1, 1') for feeding the harvesting means (13; 23-25, **characterized in that** the harvesting means comprises a vessel (13) provided with a support (15, 22) for the spool (1), as well as hoisting means (14) for transferring the spool (1) between a position in a body (4) of water and a position on the support (15, 22).

**2.** System according to claim 1, wherein the vessel (13) comprises a further support (15', 22') for a further spool (1'), the member (7) being transferable between both spools (1, 1') by winding respectively unwinding.

**3.** System according to claim 1 or 2, wherein the support (15, 15') comprises a tilting table (17, 17') for transferring the spool (1, 1') between an upright position and a lying position.

**4.** System according to claim 2 or 3, wherein the vessel (13) comprises a removing means (23) for removing the seed mussels from the member (7) while said member is being transferred between the spools (1, 1').

**5.** System according to any of the preceding claims, wherein the member (7) extends in a screw like fashion around the spool (1, 1').

**6.** System according to claim 5, wherein neighbouring windings (8) of the member on the spool enclose an open space (9).

**7.** System according to any of the preceding claims, wherein the spool (1, 1') comprises a cage (10) consisting of circumferentially extending hoops (11) connected through axially extending bars (12).

**8.** System according to any of the preceding claims, wherein the spool (1, 1') comprises an axial hollow central shaft (2, 2'), vertically oriented mooring means (31) being provided which can be founded on the bottom (3) of a body (4) of water, the shaft (2, 2') in a vertical position being slideable over the mooring means (31).

**9.** System according to claim 8, wherein the mooring means comprise a slender body (31), such as a pipe or axle.

**10.** Method for harvesting seed mussels with the system according to any of the preceding claims, comprising the steps of:
- providing at least one spool (1,1'),
- winding the bendable elongate growing member (7) around said spool (1,1'),
- mooring the spool (1, 1') with member (7) wound thereon to the bed (3) of a body (4) of water, so as to collect larvae which mature into seed mussels,
- retrieving the spool (1, 1') with member (7) wound thereon and seed mussels adhered to said member from the body (4) of water,
- unwinding the member (7) from the spool (1, 1') and removing the seed mussels from said member (7).

**11.** Method according to claim 10, wherein the member (7) after unwinding from the spool (1) and removing the seed mussels is wound onto a second spool (1').

**12.** Method according to claim 10 or 11, comprising the step of bringing the spool (1, 1') in a lying position after retrieval thereof and before unwinding the member (7).

**13.** Vessel to be used in the system according to any of claims 1-9, comprising at least one support (15, 22; 15', 22') for a spool (1, 1').

**14.** Vessel according to claim 13, comprising two supports (15, 22; 15', 22') which each can support a respective spool (1, 1').

**15.** Vessel according to claim 13 or 14, wherein the support comprises a tilting table (15, 15') for transferring the spool (1, 1') between an upright position and a lying position.

**16.** Vessel according to claim 13, 14 or 15, comprising removing means (23) for removing the seed mussels from the member (7) after unwinding thereof.
